(19) Europäisches Patentamt / European Patent Office / Office européen des brevets

(11) **EP 2 225 568 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(21) Anmeldenummer: **08863650.1**

(22) Anmeldetag: **13.11.2008**

(51) Int Cl.:
**G01P 13/04** *(2006.01)*  **G01P 7/00** *(2006.01)*

(86) Internationale Anmeldenummer:
**PCT/EP2008/009572**

(87) Internationale Veröffentlichungsnummer:
**WO 2009/080157 (02.07.2009 Gazette 2009/27)**

(54) **VERFAHREN UND VORRICHTUNG ZUR FAHRTRICHTUNGSERKENNUNG EINES FAHRZEUGS**

METHOD AND DEVICE FOR DETECTING THE TRAVEL DIRECTION OF A VEHICLE

PROCEDE ET DISPOSITIF D'IDENTIFICATION DU SENS DE DEPLACEMENT D'UN VEHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.12.2007 DE 102007061811**

(43) Veröffentlichungstag der Anmeldung:
**08.09.2010 Patentblatt 2010/36**

(73) Patentinhaber: **Valeo Schalter und Sensoren GmbH**
**74321 Bietigheim-Bissingen (DE)**

(72) Erfinder:
• **HOFFSOMMER, Klaus**
**74321 Bietigheim-Bissingen (DE)**
• **SUCKEL, Henning**
**88214 Ravensburg (DE)**

(56) Entgegenhaltungen:
**EP-A- 0 492 642       EP-A- 1 655 206**
**WO-A- 02/062640       DE-A1-102006 001 378**
**DE-A1-102006 003 674**

**Beschreibung**

Stand der Technik

Die Erfindung betrifft ein Verfahren und eine Vorrichtung zur Fahrtrichtungserkennung eines Fahrzeugs gemäß dem Oberbegriff der Ansprüche 1 und 13.

Eine Fahrtrichtungserkennung ist für eine Vielzahl von in modernen Fahrzeugen verbauten Fahrassistenzsystemen, wie beispielsweise Parkassistenzsysteme, Umfelderfassungssysteme und dergleichen von besonderer Wichtigkeit. So benötigen beispielsweise Parkassistenzsysteme, die das Einparken in eine parallel zur Fahrbahn ausgerichtete Parklücke unterstützen, eine zuverlässige Fahrtrichtungserkennung.

Durch EP 1 655 206 A2 ist bekannt, mittels Abstandssensoren bei einem Einparkvorgang laufend gewonnene Abstandsdaten zur Bestimmung der Fahrtrichtung zu verwenden. Nachteilig an einer solchen Lösung ist deren Bedarf an kostenintensiven, zusätzlichen Abstandssensoren.

Aus der DE 10 2006 003 674 A1 ist ein Verfahren zur Fahrtrichtungserkennung eines Fahrzeugs bekannt, bei dem ein Vorzeichen einer ermittelten Geschwindigkeit bestimmt wird, um die Fahrtrichtung zu erhalten. Dabei werden ein Beschleunigungssignal eines Beschleunigungssensors und zusätzlich ein Geschwindigkeitssignal, das eine Geschwindigkeitsinformation umfasst, erfasst. Die Geschwindigkeit wird durch Integration des Beschleunigungssignals ermittelt. Aus der Geschwindigkeitsinformation wird eine Integrationskonstante abgeleitet. Um die Geschwindigkeit mittels Integration aus dem Beschleunigungssignal zu berechnen, wird die die Integrationskonstante bildende Geschwindigkeitsinformation des Fahrzeugs zu dem Zeitpunkt benötigt, an dem mit der Integration begonnen wird. Die Integration zur Ermittlung der Geschwindigkeit wird jeweils neu begonnen, wenn die von Radimpulsgebern stammende Geschwindigkeitsinformation mit einem vorgebbaren Schwellenwert übereinstimmt. Um als konstant angesehene Gravitationseinflüsse zu eliminieren wird das Beschleunigungssignal zunächst differenziert und anschließend integriert. Zusätzlich ist eine Korrektur des Beschleunigungssignals durch einen Offset des Beschleunigungssensors vorgesehen. Der Offset entspricht der bei Übereinstimmung der Geschwindigkeit mit dem Schwellenwert vorherrschenden Beschleunigung und wird von dem Beschleunigungssignal abgezogen. Der Offset wird durch zeitliche Differentiation der Geschwindigkeitsinformation gebildet.

Nachteilig an diesem Verfahren ist, dass die Offsetbestimmung des Beschleunigungssensors ungenau ist. Während einer Fahrt mit einer Geschwindigkeit unterhalb des Schwellenwerts, bei dem der Offset bestimmt wird, kann sich z. B. eine Steigung, auf der das Fahrzeug bewegt wird, ändern und somit der Offset verändern. Die Empfindlichkeit des Beschleunigungssensors auf Gravitation ist entsprechend dem Hangabtrieb proportional zum Sinus der Steigung (ca. 1,5 m/s$^2$ bei 10° Steigung).

Offenbarung der Erfindung

Eine Aufgabe der Erfindung ist es, ein Verfahren und eine Vorrichtung zur Fahrtrichtungserkennung eines Fahrzeugs der gattungsgemäßen Art ohne zusätzlichen Bauteileaufwand zu verbessern. Diese Aufgabe wird gelöst durch ein Verfahren und eine Vorrichtung mit den kennzeichnenden Merkmalen der nebengeordneten Hauptansprüche.

Eine vorteilhafte Ausgestaltung der Erfindung betrifft demnach ein Verfahren zur Fahrtrichtungserkennung eines Fahrzeugs unter Verwendung von Wegimpulsen und einem Beschleunigungssignal, bei dem in einem Berechnungsvorgang durch Integration des Beschleunigungssignals eine Geschwindigkeit errechnet wird. Dabei laufen mehrere Berechnungsvorgänge parallel, wobei jeder Berechnungsvorgang einen eigenen, leicht verschieden angenommenen Beschleunigungssensoroffset hat. Die Berechnungsvorgänge errechnen zyklisch die sich aus den unterschiedlichen Beschleunigungssensoroffsets ergebenden Geschwindigkeiten, einschließlich einer sich hieraus ergebenden Fahrtrichtungsinformation sowie zugehörige, virtuelle Wegimpulse. Die virtuellen Wegimpulse der einzelnen Berechnungsvorgänge werden mit den tatsächlichen Wegimpulsen verglichen. Die errechnete Geschwindigkeit desjenigen Berechnungsvorgangs ist gültig, der mit den tatsächlichen Wegimpulsen am besten übereinstimmt.

Aus dem Stand der Technik ist bekannt, dass eine von einem Beschleunigungssensor erfasste Beschleunigung mit einer Wegstrecke korrelieren muss, wobei Weginformationen aus Wegimpulsen nur bei einer oberhalb eines Schwellenwerts liegenden Geschwindigkeit verwendet werden bzw. Berücksichtigung finden. Die Beschleunigung enthält dabei auch eine Fahrtrichtungsinformation. Der Offsetfehler des Beschleunigungssensors sowie Situationen, in denen ein Fahrzeug schräg steht, lassen somit für geringe Geschwindigkeiten keine zuverlässige Aussage zu, ob sich das Fahrzeug vorwärts oder rückwärts bewegt, da die Wegimpulse beim Stand der Technik keine Richtungsinformation enthalten. Weitere Richtungsinformationen, wie beispielsweise ein eingelegter Gang bzw. eine Gangstellung, sind bei mittleren Geschwindigkeiten zuverlässig, nicht jedoch bei geringen Geschwindigkeiten. Wenn nun die Geschwindigkeit sehr gering ist, gibt es keine oder nur wenige Wegimpulse und es existiert nach dem Stand der Technik keine Möglichkeit einer zuverlässigen Richtungsinformation. Dies ist z.B. beim langsamen Ausrollen an einer Steigung der Fall, bei der zu einem nicht feststellbaren Zeitpunkt ein Fahrtrichtungswechsel auftritt und das Fahrzeug die Steigung hinab rollt.

Das erfindungsgemäße Verfahren ermöglicht demgegenüber, auch bei sehr niedrigen Geschwindigkeiten eine Fahrtrichtungs- und Geschwindigkeitsinformation zu erhalten.

Eine vorteilhafte Ausgestaltung des ersten erfindungsgemäßen Verfahrens sieht vor, dass sich aus den Berechnungsvorgängen ergebende, jeweils eine Fahrtrichtungsinformation und einen virtuellen Wegimpuls umfassende Informations-Paare vorzugsweise für kurze Zeit in einem Buffer abgelegt werden, sodass diese Informations-Paare nachträglich ausgewertet werden können, und nachträglich aus den im Buffer abgelegten Informations-Paaren eine korrekte Fahrbewegung rekonstruiert wird. Vorzugsweise können auch weitere Informationen wie z.B. Zeitpunkt eines Richtungswechsels und/oder ein Geschwindigkeitsprofil aus dem Buffer rekonstruiert werden.

Vorzugsweise werden die virtuellen Wegimpulse der einzelnen Berechnungsvorgänge zusätzlich mit einer Fahrtrichtungsaussage mindestens einer anderen Quelle verglichen, beispielsweise wenn die Geschwindigkeit hoch genug ist, dass eine beispielsweise aus Wegimpulsen gewonnene Aussage zuverlässig ist.

Berechnungsvorgänge, deren errechnete Geschwindigkeiten nicht gültig sind, werden vorzugsweise gestoppt.

Ebenso ist denkbar, dass Berechnungsvorgänge, deren errechnete Geschwindigkeiten nicht gültig sind oder deren errechnete Geschwindigkeiten die größte Differenz zur gültigen errechneten Geschwindigkeit des besten Berechnungsvorganges aufweisen, kombinierte Daten aus mindestens einem am besten laufenden Berechnungsvorgang übernehmen, oder neu gestartet werden.

Eine vorteilhafte Ausgestaltung der Erfindung betrifft ebenfalls ein Verfahren zur Fahrtrichtungserkennung eines Fahrzeugs unter Verwendung von Wegimpulsen und einem Beschleunigungssignal, bei dem in einem Berechnungsvorgang durch Integration des Beschleunigungssignals eine Geschwindigkeit errechnet wird. Gemäß dem zweiten Gegenstand der Erfindung werden in dem Berechnungsvorgang zusätzlich eine sich aus der errechneten Geschwindigkeit ergebende Fahrtrichtungsinformation und zugehörige, virtuelle Wegimpulse errechnet, wobei die virtuellen Wegimpulse des Berechnungsvorgangs mit den tatsächlichen Wegimpulsen verglichen werden, und der Berechnungsvorgang kontinuierlich korrigiert wird, wenn die virtuellen Wegimpulse nicht mit den tatsächlichen übereinstimmen.

Der Gegenstand der Erfindung betrifft ein Verfahren zur Fahrtrichtungserkennung eines Fahrzeugs, bei dem ein Vorzeichen einer ermittelten Geschwindigkeit V(t) bestimmt wird, um die Fahrtrichtung zu erhalten, wobei ein Beschleunigungssignal a(t) eines Beschleunigungssensors und zusätzlich ein Geschwindigkeitssignal, das eine Geschwindigkeitsinformation $V_1$ umfasst, erfasst werden, und die Geschwindigkeit V(t) mittels Integration des Beschleunigungssignals a(t) ermittelt wird. Eine Integrationskonstante $V_0$ wird aus der Geschwindigkeitsinformation $V_1$ abgeleitet. Eine Korrektur des Beschleunigungssignals a(t) durch einen Offset $a_{Offset}$ des Beschleunigungssensors ist vorgesehen. Das erfindungsgemäße Verfahren ist dadurch gekennzeichnet, dass zunächst ein Offsetstartwert $a_o$ des Beschleunigungssensors durch Bestimmung eines zeitlichen Differentials $dV_1/dt$ der Geschwindigkeitsinformation $V_1$ und Subtraktion dieses Differentials $dV_1/dt$ von dem Beschleunigungssignal a(t) gebildet wird, und der Offset $a_{Offset}$ des Beschleunigungssensors nach einer bestimmten Zeit korrigiert wird, indem eine Momentangeschwindigkeit $V_L$ für langsame Fahrt generiert wird, welche mit der Geschwindigkeit $V_{a(t)}(t)$, die durch Integration des Beschleunigungssignals a(t) gewonnen wurde, verglichen wird, wobei die Differenz $V_{a(t)}(t)-V_L$ der beiden Geschwindigkeiten zur Korrektur des Offsets $a_{Offset}$ des Beschleunigungssensors verwendet wird.

Vorteile der Erfindung gegenüber dem Stand der Technik ergeben sich insbesondere dadurch, dass es mit dem genauer bestimmten Offset möglich ist, die Geschwindigkeit im Bereich sehr geringer Geschwindigkeit bzw. Stillstand oder Fahrtrichtungswechsel durch Integration des Beschleunigungssignals zu bestimmen.

Eine vorteilhafte Ausgestaltung des Verfahrens sieht vor, dass die Momentangeschwindigkeit $V_L$ für langsame Fahrt aus Radimpulsen mindestens eines Radimpulsgebers generiert wird.

Zur Bestimmung einer vorzugsweise betragsmäßigen Momentangeschwindigkeit $V_L$ für langsame Fahrt aus Radimpulsen wird vorzugsweise eine Wegstrecke $\Delta s$ durch eine gemessene Zeit $\Delta t$ dividiert, wobei sich die Wegstrecke $\Delta s$ aus dem Weg zusammensetzt, den mindestens ein mit einem Radimpulsgeber versehenes Rad seit einem letzten Radimpulswechsel mindestens eines Radimpulszählers zurückgelegt hat, und als gemessene Zeit $\Delta t$ die Anzahl von Loops zwischen den vergangenen zwei Radimpulsen, oder falls größer, die Zeit seit dem letzten Radimpulswechsel genommen wird.

Wenn sich in einem Loop keiner der Zählerstände des mindestens einen Radimpulszählers ändert, kann eine Extrapolierung der Momentangeschwindigkeit $V_L$ durchgeführt werden, wobei als Ausgangsgeschwindigkeit $V_A$ der letzte, bei einem Radimpulswechsel berechnete Momentangeschwindigkeitswert $V_{L-1}$ verwendet wird, und die extrapolierte Momentangeschwindigkeit $V_{Lextr.}$ gemäß

$$V_{Lextr.} = V_A + a_L \cdot \Delta t_L$$

berechnet wird, mit der zuletzt bei einem Radimpulswechsel berechneten Momentangeschwindigkeit $V_A$, entsprechend $V_{L-1}$, der Beschleunigung $a_L$ und der Zeit $\Delta t_L$ entsprechend der Anzahl der Loops seit dem letzten Radimpulswechsel.

Die Beschleunigung $a_L$ wird aus dem letzten, bei einem Radimpulswechsel errechneten Momentangeschwindigkeitswert $V_{L-1}$ und einem davor berechneten Momentangeschwindigkeitswert $V_{L-2}$ berechnet. Die Differenz der beiden Momentangeschwindigkeitswerte $V_{L-1}$ - $V_{L-2}$ dividiert durch die zwischen den Berechnungen der beiden Momentangeschwindigkeitswerte $V_{L-1}$ und $V_{L-2}$ liegenden Zeit $\Delta t_{L2-1}$ entspricht der Beschleunigung $a_L$.

Wenn nur der Betrag der Momentangeschwindigkeit berechnet werden soll, wird deren Wert vorzugsweise auf Null festgelegt, wenn die extrapolierte Momentangeschwindigkeit $V_{Lextr.}$ kleiner als Null wird.

Die extrapolierte Momentangeschwindigkeit $V_{Lextr.}$ kann durch Vergleich von

$$\Delta s_L < \frac{1}{2} a_L \cdot \Delta t_L{}^2$$

und

$$\Delta s_L < V_L \cdot \Delta t_L$$

plausibilisiert werden, wobei für alle extrapolierten Momentangeschwindigkeitswerte $V_{Lextr.}$ nach einer bestimmten Zeit $\Delta t_L$ zumindest wenn die Beschleunigung $a_L$ positiv oder null ist, ein einer bestimmten Wegstrecke $\Delta s_L$ entsprechender Radzählimpuls erwartet werden kann.

Eine Bestimmung der Geschwindigkeit $V(t)$ des Fahrzeugs wird vorzugsweise durch Integration des offsetkorrigierten Beschleunigungssignals $a_{ges}(t)$ durchgeführt, wobei eine Integrationskonstante berücksichtigt wird, welche der Anfangsgeschwindigkeit $V_0$ des Fahrzeugs zum Zeitpunkt der Offsetbestimmung entspricht, gemäß

$$V(t) = V_0 + \int_0^t a_{ges}(t)\,dt,$$

wobei sich das dabei verwendete offsetkorrigierte Beschleunigungssignal $a_{ges}(t)$ gemäß

$$a_{ges}(t) = a(t) + a_{offset} + g \cdot \sin(\alpha(t))$$

zusammensetzt.

Für den Offset $a_{offset}$ des Beschleunigungssensors gilt vorzugsweise

$$a_{offset} = \frac{\Delta V - V_0 + V_L - \int_0^t a(t)\,dt - g \cdot \int_0^t \sin(\alpha(t))\,dt}{t},$$

mit der Erdbeschleunigung $g$, der Anfangsgeschwindigkeit $V_0$, dem zeitlichen Verlauf der Steigung $\alpha(t)$ und dem Beschleunigungssignal $a(t)$, wobei für eine gemessene Abweichung $\Delta V$ der durch Integration des korrigierten Beschleunigungssignals bestimmten Geschwindigkeit $V(t)$ und der durch Radimpulse gewonnenen Geschwindigkeitsinformation $V_1$

$$\Delta V = V(t) - V_L$$

gilt.

Gemäß einer besonders vorteilhaften Ausgestaltung der Erfindung wird der Offset nach einer bestimmten Zeit zyklisch bestimmt.

Eine vorteilhafte Ausgestaltung der Erfindung betrifft ein Verfahren zur Fahrtrichtungserkennung eines Fahrzeugs, bei dem ein Vorzeichen einer ermittelten Geschwindigkeit V(t) bestimmt wird, um die Fahrtrichtung zu erhalten, wobei ein Beschleunigungssignal a(t) eines Beschleunigungssensors und zusätzlich ein Geschwindigkeitssignal, das eine Geschwindigkeitsinformation $V_1$ umfasst, erfasst werden, und die Geschwindigkeit V(t) mittels Integration des Beschleunigungssignals a(t) ermittelt wird, wobei eine Integrationskonstante $V_0$ aus der Geschwindigkeitsinformation $V_1$ abgeleitet wird, und wobei eine Korrektur des Beschleunigungssignals a(t) durch einen Offset $a_{Offset}$ des Beschleunigungssensors vorgesehen ist. Dieses Verfahren ist erfindungsgemäß dadurch gekennzeichnet, dass zur Bestimmung des Offsets $a_{offset}$ des Beschleunigungssensors der Verlauf einer Steigung $\alpha(t)$ berücksichtigt wird.

Zur Berücksichtigung des Verlaufs der Steigung bei der Bestimmung des Offsets $a_{Offset}$ des Beschleunigungssensors kann ein zeitlicher Bezug des Verlaufs der Steigung hergestellt werden, indem ein Steigungswinkel $\alpha(t)$ auf die zeitliche Position des Fahrzeugs an der Steigung bezogen wird.

Zur Berücksichtigung des Verlaufs der Steigung bei der Bestimmung des Offsets des Beschleunigungssensors kann ein zeitliches Integral des Hangabtriebs $g \cdot \sin(\alpha(t))$ gebildet werden, und dieses Integral durch die Differenz zwischen oberer und unterer Grenze dieses Integrals dividiert werden.

Der Erfindung wird anhand einer Figur der Zeichnung und einem rechnerischen Ausführungsbeispiel erläutert.

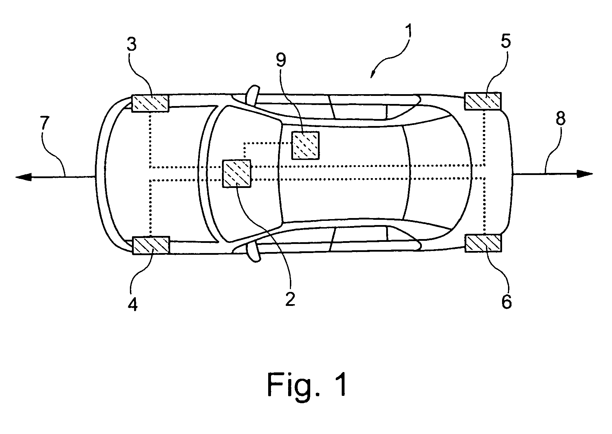

Figur 1 zeigt eine schematische Ansicht eines Fahrzeugs mit Sensoren für ein Parkassistenzsystem.

Aus Figur 1 ist ein Fahrzeug 1 zu entnehmen, das in eine parallel zur Fahrbahn ausgerichtete Parklücke abgestellt werden soll. Aus dem eingangs erwähnten Stand der Technik DE 10 2004 029 038 A1 ist hierzu bekannt, dass jeweils eine Vielzahl von Detektoranordnungen am Fahrzeugs 1 mit entsprechenden Sensoren, beispielsweise Ultraschallsendern und -empfängern, angebracht ist. Ferner ist aus der eingangs erwähnten DE 10 2006 003 674 A1 ein Verfahren zur Fahrtrichtungserkennung eines Fahrzeugs bekannt, bei dem darüber hinaus auch Beschleunigungssignale ausgewertet werden.

Beim in der Figur 1 dargestellten Fahrzeug 1 ist schematisch ein Beschleunigungssensor 2 mit einer entsprechenden ersten Auswerteeinheit gezeigt, der auch zur Auswertung von aus Impulsgebern 3,4,5 und 6 ermittelten Weg- oder Radimpulsen an den Rädern des Kraftfahrzeuges 1 ausgerüstet ist. Ferner sind mit Pfeilen 7 und 8 noch die Trajektorien des Fahrzeugs 1 für die Vorwärts- und Rückwärtsbewegung angegeben.

Die Impulsgeber 3,4,5 und 6 sind über entsprechende Kommunikationskanäle (z. B. CAN-Bus) mit einer in der Regel computergesteuerten Auswerteeinheit 9 im Fahrzeug 1 verbunden, die aus den Daten der Impulsgeber 3,4,5 und 6 und weiteren fahrzeugspezifischen Daten, wie zum Beispiel Geschwindigkeit und Lenkwinkel, ein Parkassistenzsystems für das Fahrzeug 1 bereitstellt, mit dem der zuvor erwähnte Park- oder Abstellvorgang in der nachfolgend erläuterten Weise durchführbar oder unterstützbar ist.

Die rechnerischen Zusammenhänge der Erfindung zur Durchführung des Parkassistenzsystems werden nachfolgend mit einem Ausführungsbeispiel erläutert.

Zur Bestimmung von Geschwindigkeit V(t) und Fahrtrichtung eines Fahrzeugs mittels eines Beschleunigungssignals a(t) eines Beschleunigungssensors 2 und einem Geschwindigkeitssignal, das eine Geschwindigkeitsinformation $V_1$ umfasst, wird die Geschwindigkeit V(t) mittels Integration des Beschleunigungssignals a(t) ermittelt, wobei eine Integrationskonstante $V_0$ aus der Geschwindigkeitsinformation $V_1$ abgeleitet wird und eine Korrektur des Beschleunigungssignals durch einen Offset $a_{Offset}$ des Beschleunigungssensors 2 vorgesehen ist.

Zur Bestimmung des Offsets $a_{Offset}$ des Beschleunigungssensors 2 erfolgt zunächst eine Differenzierung der Geschwindigkeitsinformation $V_1$. Von einem CAN Bus des Fahrzeugs, an den beispielsweise Radimpulszähler angeschlossen sind, wird eine Geschwindigkeitsinformation $V_1$ des Fahrzeugs geliefert, die unterhalb von 0,7 km/h abrupt auf Null geht. Diese Geschwindigkeitsinformation $V_1$ wird zeitlich differenziert und gefiltert, wodurch ein gleitender Mittelwert gebildet wird, und dieses Differential $dV_1/dt$ bzw. $V_1/\Delta t$ von dem vorzugsweise ebenso gefilterten Beschleunigungssignal a(t) subtrahiert. Bei einer Geschwindigkeit von beispielsweise 2 km/h wird diese Differenz als Offsetstartwert $a_0$ gespeichert. Hierdurch kann bereits eine korrigierte Geschwindigkeit $V_{a(t)}(t)$ durch Integration des Beschleunigungssignals a(t) abzüglich des Offsetstartwerts $a_0$ ermittelt werden gemäß:

$$V_{a(t)}(t) = \int\limits_0^t (a(t) - a_0)\,dt = \int\limits_0^t \left( a(t) - \frac{dV_1}{dt} \right) dt .$$

Mit $V_1 = V_0$ wird hieraus:

$$V_{a(t)}(t) = V_0 + \int\limits_0^t a(t)\,dt.$$

Durch Reifentoleranzen an den Rädern des Fahrzeugs 1, Nichtlinearitäten des Beschleunigungssensors 2 und/oder Schlupf ist dieser Wert fehlerbehaftet. Notwendig ist zu diesem Zeitpunkt eine Fahrtrichtungsinformation, beispielsweise anhand des gewählten Ganges.

Der zunächst nur den Offsetstartwert $a_o$ umfassende Offset $a_{Offset}$ des Beschleunigungssensors 2 wird erfindungsgemäß eine bestimmte Zeit nach Bestimmung des zeitlichen Differentials der Geschwindigkeitsinformation $dV_1/dt$ bzw. $V_1/\Delta t$ und Subtraktion vom Beschleunigungssignal a(t) dadurch korrigiert, indem vorzugsweise aus Radimpulsen eine Momentangeschwindigkeit $V_L$ für langsame Fahrt generiert wird und mit der Geschwindigkeit $V_{a(t)}(t)$, die durch Integration des Beschleunigungssignals a(t) gewonnen wurde, verglichen wird. Nach einer bestimmten Zeit, und danach zyklisch, wird aus der Differenz der Momentangeschwindigkeit $V_L$ und der Geschwindigkeit $V_{a(t)}(t)$ der Offset $a_{Offset}$ des Beschleunigungssignals a(t) korrigiert. Mit dem im Vergleich zum Stand der Technik genauer bestimmten Offset ist es möglich, die Geschwindigkeit V(t) des Fahrzeugs im Bereich sehr geringer Geschwindigkeit bzw. Stillstand oder Fahrtrichtungswechsel des Fahrzeugs durch Integration des Beschleunigungssignals a(t) zu bestimmen.

Zur Bestimmung einer betragsmäßigen Momentangeschwindigkeit $V_L$ für langsame Fahrt aus Radimpulsen wird eine Wegstrecke As durch eine gemessene Zeit $\Delta t$ dividiert. Die Wegstrecke As setzt sich aus dem Weg aller Räder des Fahrzeugs zusammen, die diese jeweils seit dem letzten Radimpulswechsel zurückgelegt haben. Gezählt werden Differenzen von mit den Impulsgebern 3,4,5 und 6 an den Rädern verbundenen Radimpulszählern. Ändert ein Rad pro im Folgenden als Loop bezeichnetem Programmdurchlauf einen Radimpulszähler um mehr als einen Impuls, wird dies berücksichtigt. Da die Vorderräder eventuell einen Lenkeinschlag aufweisen, wird der Lenkwinkel in die Berechnung der Wegstrecke s einbezogen, sodass nur der Weg in Fahrtrichtung in die Berechnung der Wegstrecke s einfließt. Die Berechnung bzw. Bestimmung des Lenkwinkels der Räder erfolgt anhand des Lenkeinschlags über die Lenkwinkelübersetzung oder über eine Lenkwinkeltabelle. Als gemessene Zeit $\Delta t$ wird die Anzahl der Loops zwischen den vergangenen zwei Radimpulsen, oder falls größer, die Zeit seit dem letzten Radimpulswechsel genommen. Alle Räder des Fahrzeugs fließen auf diese Weise in die Berechnung ein. Die Genauigkeit bzw. der im Folgenden als Rauschen bezeichnete Fehler der Berechnung ist abhängig von der Momentangeschwindigkeit $V_L$, da der Zählerstand des Radimpulszählers nur mit einer bestimmten Rate aktualisiert wird. Ändert sich in einem Loop keiner der Zählerstände der Radimpulszähler, wird extrapoliert. Als Ausgangsgeschwindigkeit $V_A$ wird dabei immer der letzte, bei einem Radimpulswechsel berechnete Momentangeschwindigkeitswert $V_{L-1}$ verwendet. Die folgenden Momentangeschwindigkeitswerte $V_L$ werden gemäß

$$V_{Lextr.} = V_A + a_L \cdot \Delta t_L$$

berechnet, mit der extrapolierten Momentangeschwindigkeit $V_{Lextr.}$, der zuletzt bei einem Radimpulswechsel berechneten Momentangeschwindigkeit $V_A$, entsprechend $V_{L-1}$, der Beschleunigung $a_L$ und der Zeit $\Delta t_L$ entsprechend der Anzahl der Loops seit dem letzten Radimpulswechsel. Wenn die extrapolierte Geschwindigkeit $V_{Lextr.}$ kleiner als Null wird, wird der Wert auf Null festgelegt, da es keine Geschwindigkeit unter Null geben kann, da $V_L$ nur den Betrag der Momentangeschwindigkeit angibt.

Die Beschleunigung $a_L$ berechnet sich aus dem letzten, bei einem Radimpulswechsel errechneten Momentangeschwindigkeitswert $V_{L-1}$ und einem davor berechneten Momentangeschwindigkeitswert $V_{L-2}$. Die Differenz der beiden Momentangeschwindigkeitswerte $V_{L-1} - V_{L-2}$ dividiert durch die zwischen den Berechnungen der beiden Momentangeschwindigkeitswerte $V_{L-1}$ und $V_{L-2}$ liegenden Zeit $\Delta t_{L2-1}$ ergibt die Beschleunigung $a_L$.

Diese extrapolierte Momentangeschwindigkeit $V_{Lextr.}$ wird anschließend plausibilisiert. Durch Rauschen in der berechneten bzw. extrapolierten Momentangeschwindigkeit $V_{Lextr.}$ kann es zu fehlerhaften Werten für die Beschleunigung $a_L$ kommen. Der entstandene Fehler kann durch Plausibilisierung verringert werden. Für alle extrapolierten Momentangeschwindigkeitswerte $V_{Lextr.}$ kann nach einer bestimmten Zeit $\Delta t_L$ zumindest wenn die Beschleunigung positiv oder null ist, ein einer bestimmten Wegstrecke $\Delta S_L$ entsprechender Radzählimpuls erwartet werden. Die Plausibilisierung erfolgt durch Vergleich von:

$$\Delta s_L < \frac{1}{2} a_L \cdot \Delta t_L^{\,2}$$

und:

$$\Delta s_L < V_L \cdot \Delta t_L .$$

Eine Bestimmung der Geschwindigkeit V(t) des Fahrzeugs wird durch Integration des offsetkorrigierten Beschleunigungssignals $a_{ges}(t)$ durchgeführt. Dabei wird eine Integrationskonstante berücksichtigt, welche der Anfangsgeschwindigkeit $V_0$ des Fahrzeugs zum Zeitpunkt der Offsetbestimmung entspricht, gemäß:

$$V(t) = V_0 + \int_0^t a_{ges}(t)dt .$$

Das dabei verwendete offsetkorrigierte Beschleunigungssignal $a_{ges}(t)$ setzt sich erfindungsgemäß zusammen gemäß:

$$a_{ges}(t) = a(t) + a_{offset} + g \cdot \sin(\alpha(t)),$$

wobei $a_{offset}$ den Offset des Beschleunigungssensors bezeichnet.

Für eine gemessene, im Folgenden als ΔV bezeichneten Abweichung der durch Integration des korrigierten Beschleunigungssignals $a_{ges}(t)$ bestimmten Geschwindigkeit V(t) und der durch Radimpulse gewonnenen Geschwindigkeitsinformation $V_1$ gilt:

$$\Delta V = V(t) - V_L .$$

Daraus folgt für den Offset $a_{offset}$ des Beschleunigungssensors 2:

$$a_{offset} = \frac{\Delta V - V_0 + V_L - \int_0^t a(t)dt + g \cdot \int_0^t \sin(\alpha(t))dt}{t}$$

mit der Erdbeschleunigung g, der Anfangsgeschwindigkeit $V_0$, dem zeitlichen Verlauf der Steigung α(t) und dem Beschleunigungssignal a(t).

Nach einer bestimmten Zeit kann mit der Korrektur begonnen werden. Der Offset $a_{offset}$ des Beschleunigungssensors 2 wird danach zyklisch korrigiert. Dabei ist die Momentangeschwindigkeit $V_L$ bei langsamer Fahrt nur betragsmäßig verfügbar und wird zur Korrektur der Geschwindigkeit V(t) aus dem Beschleunigungssignal a(t) verwendet.

**Patentansprüche**

1. Verfahren zur Fahrtrichtungserkennung eines Fahrzeugs, bei dem ein Vorzeichen einer ermittelten Geschwindigkeit $V(t)$ bestimmt wird, um die Fahrtrichtung zu erhalten, wobei ein Beschleunigungssignal $a(t)$ eines Beschleunigungssensors (2) und zusätzlich eine Geschwindigkeitsinformation $V_1$ erfasst werden und die Geschwindigkeit $V(t)$ mittels Integration des Beschleunigungssignals $a(t)$ ermittelt wird, wobei eine Integrationskonstante $V_0$ aus der Geschwindigkeitsinformation $V_1$ abgeleitet wird, und wobei eine Korrektur des Beschleunigungssignals $a(t)$ durch einen Offset $a_{Offset}$ des Beschleunigungssensors (2) vorgesehen ist,
**dadurch gekennzeichnet,**
**dass** zunächst ein Offsetstartwert $a_0$ des Beschleunigungssensors (2) durch Bestimmung eines zeitlichen Differentials $dV_1/dt$ der Geschwindigkeitsinformation $V_1$ und Subtraktion dieses Differentials $dV_1/dt$ von dem Beschleunigungssignal $a(t)$ gebildet wird, und der Offset $a_{Offset}$ des Beschleunigungssensors (2) nach einer bestimmten Zeit korrigiert wird, indem eine Momentangeschwindigkeit $V_L$ für langsame Fahrt generiert wird, welche mit der Geschwindigkeit $V_{a(t)}(t)$, die durch Integration des Beschleunigungssignals $a(t)$ gewonnen wurde, verglichen wird, wobei die Differenz $V_{a(t)}(t) - V_L$ der beiden Geschwindigkeiten zur Korrektur des Offsets $a_{Offset}$ des Beschleunigungssensors (2) verwendet wird.

2. Verfahren nach Anspruch 1,
**dadurch gekennzeichnet,**
**dass** die Momentangeschwindigkeit $V_L$ für langsame Fahrt aus Radimpulsen mindestens jeweils eines Impulsgebers (3,4,5,6) generiert wird.

3. Verfahren nach Anspruch 2,
**dadurch gekennzeichnet,**
**dass** zur Bestimmung einer Momentangeschwindigkeit $V_L$ für langsame Fahrt aus Radimpulsen eine Wegstrecke $\Delta s$ durch eine gemessene Zeit $\Delta t$ dividiert wird, wobei sich die Wegstrecke $\Delta s$ aus dem Weg zusammen setzt, den mindestens ein mit einem Impulsgeber (3,4,5,6) versehenes Rad seit einem letzten Radimpulswechsel mindestens eines Radimpulszählers zurückgelegt hat, und als gemessene Zeit $\Delta t$ die Anzahl von Loops zwischen den vergangenen zwei Radimpulsen, oder falls größer, die Zeit seit dem letzten Radimpulswechsel genommen wird.

4. Verfahren nach Anspruch 3,
**dadurch gekennzeichnet,**
**dass** wenn sich in einem Loop keiner der Zählerstände des mindestens einen Radimpulszählers ändert, eine Extrapolierung der Momentangeschwindigkeit $V_L$ durchgeführt wird, wobei als Ausgangsgeschwindigkeit $V_A$ der letzte, bei einem Radimpulswechsel berechnete Momentangeschwindigkeitswert $V_{L-1}$ verwendet wird, und die extrapolierte Momentangeschwindigkeit $V_{Lextr.}$ gemäß

$$V_{Lextr.} = V_A + a_L \cdot \Delta t_L$$

berechnet wird, mit der zuletzt bei einem Radimpulswechsel berechneten Momentangeschwindigkeit $V_A$, der Beschleunigung $a_L$ und der Zeit $\Delta t_L$ entsprechend der Anzahl der Loops seit dem letzten Radimpulswechsel, wobei sich die Beschleunigung $a_L$ aus dem letzten, bei einem Radimpulswechsel errechneten Momentangeschwindigkeitswert $V_{L-1}$ und einem davor berechneten Momentangeschwindigkeitswert $V_{L-2}$ berechnet und die Differenz der beiden Momentangeschwindigkeitswerte $V_{L-1} - V_{L-2}$ dividiert durch die zwischen den Berechnungen der beiden Momentangeschwindigkeitswerte $V_{L-1}$ und $V_{L-2}$ liegenden Zeit $\Delta t_{L2-1}$ der Beschleunigung $a_L$ entspricht.

5. Verfahren nach Anspruch 4,
**dadurch gekennzeichnet,**
**dass** wenn nur der Betrag der Momentangeschwindigkeit berechnet werden soll, der Wert auf Null festgelegt wird, wenn die extrapolierte Momentangeschwindigkeit $V_{Lextr.}$ kleiner als Null wird.

6. Verfahren nach Anspruch 4 oder 5,
**dadurch gekennzeichnet,**
**dass** die extrapolierte Momentangeschwindigkeit $V_{Lextr.}$ durch Vergleich von

$$\Delta s_L < \frac{1}{2} a_L \cdot \Delta t_L{}^2$$

und

$$\Delta s_L < V_L \cdot \Delta t_L$$

plausibilisiert wird, wobei für alle extrapolierten Momentangeschwindigkeitswerte $V_{Lextr.}$ nach einer bestimmten Zeit $\Delta t_L$ zumindest wenn die Beschleunigung $a_L$ positiv oder null ist, ein einer bestimmten Wegstrecke $\Delta s_L$ entsprechender Radzählimpuls erwartet werden kann.

7. Verfahren nach einem der Ansprüche 2 bis 6,
   **dadurch gekennzeichnet,**
   **dass** eine Bestimmung der Geschwindigkeit V(t) des Fahrzeugs durch Integration des offsetkorrigierten Beschleunigungssignals $a_{ges}$(t) durchgeführt wird, wobei eine Integrationskonstante berücksichtigt wird, welche der Anfangsgeschwindigkeit $V_0$ des Fahrzeugs zum Zeitpunkt der Offsetbestimmung entspricht, gemäß

$$V(t) = V_0 + \int_0^t a_{ges}(t)dt \, ,$$

wobei sich das dabei verwendete offsetkorrigierte Beschleunigungssignal $a_{ges}$(t) gemäß

$$a_{ges}(t) = a(t) + a_{offset} + g \cdot \sin(\alpha(t))$$

mit der Erdbeschleunigung g, dem zeitlichen Verlauf der Steigung $\alpha$(t) und dem Beschleunigungssignal a(t) zusammensetzt.

8. Verfahren nach einem der Ansprüche 2 bis 7,
   **dadurch gekennzeichnet,**
   **dass** für den Offset $a_{offset}$ des Beschleunigungssensors (2)

$$a_{offset} = \frac{\Delta V - V_0 + V_L - \int_0^t a(t)dt - g \cdot \int_0^t \sin(\alpha(t))dt}{t}$$

gilt, wobei für eine gemessene Abweichung $\Delta V$ der durch Integration des korrigierten Beschleunigungssignals bestimmten Geschwindigkeit V(t) und der durch Radimpulse gewonnenen Geschwindigkeitsinformation $V_1$

$$\Delta V = V(t) - V_L$$

gilt.

9. Verfahren nach einem der Ansprüche 1 bis 8,
   **dadurch gekennzeichnet,**
   **dass** der Offset nach einer bestimmten Zeit zyklisch bestimmt wird.

10. Verfahren nach Anspruch 1,
**dadurch gekennzeichnet,**
**dass** zur Bestimmung des Offsets ($a_{Offset}$) des Beschleunigungssensors der Verlauf einer Steigung ($\alpha(t)$) berücksichtigt wird.

11. Verfahren nach Anspruch 10,
**dadurch gekennzeichnet,**
**dass** zur Berücksichtigung des Verlaufs der Steigung bei der Bestimmung des Offsets ($a_{Offset}$) des Beschleunigungssensors (2) ein zeitlicher Bezug des Verlaufs der Steigung hergestellt wird, indem ein Steigungswinkel ($\alpha(t)$) auf die zeitliche Position des Fahrzeugs an der Steigung bezogen wird.

12. Verfahren nach Anspruch 10 oder 11,
**dadurch gekennzeichnet,**
**dass** zur Berücksichtigung des Verlaufs der Steigung bei der Bestimmung des Offsets des Beschleunigungssensors (2) ein zeitliches Integral des Hangabtriebs ($g \cdot \sin(\alpha(t))$) gebildet, und dieses Integral durch die Differenz zwischen oberer und unterer Grenze dieses Integrals dividiert wird.

13. Vorrichtung zur Ausführung eines Verfahrens nach einem der vorhergehenden Ansprüche,
**dadurch gekennzeichnet, dass** an einem Fahrzeug (1) ein Beschleunigungssensor (2) mit einer entsprechenden ersten Auswerteeinheit vorhanden ist, mit der die mit Impulsgebern (3,4,5, 6) an Rädern des Kraftfahrzeuges (1) ermittelten Weg- oder Radimpulse auswertbar sind und dass die Impulsgeber (3,4,5, 6) und/oder der Beschleunigungssensor (2) über Kommunikationskanäle mit einer computergesteuerten Auswerteeinheit (9) im Fahrzeug 1 verbunden sind, mit der zusätzlich weitere fahrzeugspezifische Daten, wie zum Beispiel Geschwindigkeit und Lenkwinkel auswertbar sind.

**Claims**

1. Method for detecting the travel direction of a vehicle, in which an algebraic sign of a determined speed V(t) is determined in order to obtain the travel direction, an acceleration signal a(t) of an acceleration sensor (2) and, in addition, an item of speed information $V_I$ being acquired, and the speed V(t) being determined by means of integration of the acceleration signal a(t), an integration constant $V_0$ being derived from the item of speed information $V_I$, and a correction of the acceleration signal a(t) being provided by an offset $a_{Offset}$ of the acceleration sensor (2), **characterized in that** firstly an initial offset value $a_0$ of the acceleration sensor (2) is formed by determining a time differential $dV_I/dt$ of the item of speed information $V_I$ and subtracting this differential $dV_I/dt$ from the acceleration signal a(t), and the offset $a_{Offset}$ of the acceleration sensor (2) is corrected after a specific time by comparing an instantaneous speed $V_L$ generated for slow travel with the speed $V_{a(t)}(t)$ obtained by integrating the acceleration signal a(t), the difference $V_{a(t)}(t)-V_L$ between the two speeds being used to correct the offset $a_{Offset}$ of the acceleration sensor (2).

2. Method according to Claim 1, **characterized in that** the instantaneous speed $V_L$ for slow travel is generated from wheel pulses of at least in each case one pulse generator (3, 4, 5, 6).

3. Method according to Claim 2, **characterized in that** in order to determine an instantaneous speed $V_L$ for slow travel from wheel pulses, a path length $\cdot s$ is divided by a measured time $\cdot t$, the path length $\cdot s$ being composed of the path which has been covered by at least one wheel provided with a pulse generator (3, 4, 5, 6) has covered since a last wheel pulse change of at least one wheel pulse counter, and the number of loops between the expired two wheel pulses, or the time since the last wheel pulse change, is adopted as measured time $\cdot t$, whichever is larger.

4. Method according to Claim 3, **characterized in that** an extrapolation of the instantaneous speed $V_L$ is carried out when none of the counter contents of the at least one wheel pulse counter change in a loop, the last instantaneous speed value $V_{L-1}$ calculated in the event of a wheel pulse change being used as the initial speed $V_A$, and the extrapolated instantaneous speed $V_{Lextr.}$ being calculated in accordance with

$$V_{Lextr.} = V_A + a_L \cdot \Delta t_L \, ,$$

with the aid of the instantaneous speed $V_A$ last calculated in the event of a wheel pulse change, of the acceleration $a_L$ and the time $\cdot t_L$ in accordance with the number of loops since the last wheel pulse change, the acceleration $a_L$ being calculated from the last instantaneous speed value $V_{L-1}$ calculated in the event of a wheel pulse change, and from an instantaneous speed value $V_{L-2}$ calculated therebefore, and the difference between the two instantaneous speed values $V_{L-1}$ - $V_{L-2}$ divided by the time $\cdot t_{L2-1}$ lying between the calculations of the two instantaneous speed values $V_{L-1}$ and $V_{L-2}$ corresponding to the acceleration $a_L$.

5. Method according to Claim 4, **characterized in that** when only the absolute value of the instantaneous speed is to be calculated, the value is set to zero when the extrapolated instantaneous speed $V_{Lextr.}$ is less than zero.

6. Method according to Claim 4 or 5, **characterized in that** the extrapolated instantaneous speed $V_{Lextr.}$ is checked for plausibility by comparing

$$\Delta s_L < \frac{1}{2} a_L \cdot \Delta t_L{}^2$$

and

$$\Delta s_L < V_L \cdot \Delta t_L \quad ,$$

it being possible to expect a wheel counting pulse corresponding to a specific path length $\cdot s_L$ for all extrapolated instantaneous speed values $V_{Lextr.}$ after a specific time $\cdot t_L$, at least when the acceleration $a_L$ is positive or zero.

7. Method according to one of Claims 2 to 6, **characterized in that** the speed $V(t)$ of the vehicle is determined by integrating the offset-corrected acceleration signal $a_{ges}(t)$, account being taken of an integration constant which corresponds to the initial speed $V_0$ of the vehicle at the instant of the offset determination, in accordance with

$$V(t) = V_0 + \int_0^{t_E} a_{ges}(t)dt \, ,$$

the offset-corrected acceleration signal $a_{ges}(t)$ used in this process being composed in accordance with

$$a_{ges}(t) = a(t) + a_{offset} + g \cdot \sin(\alpha(t)) \quad ,$$

with the gravitational acceleration g, the time profile of the positive gradient $\cdot$(t) and the acceleration signal a(t).

8. Method according to one of Claims 2 to 7, **characterized in that** it holds for the offset $a_{Offset}$ of the acceleration sensor (2), that

$$a_{offset} = \frac{\Delta V - V_0 + V_L - \int_0^{t_E} a(t)dt - g \cdot \int_0^{t_E} \sin(\alpha(t))dt}{t} \quad ,$$

wherein it holds for a measured deviation $\cdot$V of the speed V(t) determined by integration of the corrected acceleration signal and the item of speed information $V_I$ obtained by wheel pulses that

$$\bullet V = V(t) - V_L.$$

**9.** Method according to one of Claims 1 to 8, **characterized in that** the offset is determined cyclically after a specific time.

**10.** Method according to Claim 1, **characterized in that** the profile of a positive gradient ($\cdot$(t)) is taken into account in order to determine the offset ($a_{Offset}$) of the acceleration sensor.

**11.** Method according to Claim 10, **characterized in that** in order to take account of the profile of the positive gradient when determining the offset ($a_{Offset}$) of the acceleration sensor (2), a temporal reference of the profile of the positive gradient is produced by referring the positive gradient angle ($\cdot$(t)) to the temporal position of the vehicle on the positive gradient.

**12.** Method according to Claim 10 or 11, **characterized in that** a time integral of the downhill slope force (g'sin($\cdot$(t))) is formed in order to take account of the profile of the positive gradient when determining the offset of the acceleration sensor (2), and said integral is divided by the difference between the upper and lower limits of said integral.

**13.** Device for executing a method according to one of the preceding claims, **characterized in that** present on a vehicle (1) is an acceleration sensor (2) with an appropriate first evaluation unit with the aid of which it is possible to evaluate the path pulses or wheel pulses determined with the aid of pulse generators (3, 4, 5, 6) on wheels of the motor vehicle (1), and **in that** the pulse generators (3, 4, 5, 6) and/or the acceleration sensor (2) are connected via communication channels to a computer controlled evaluation unit (9) in the vehicle (1) with the aid of which it is additionally possible to evaluate further vehicle-specific data such as, for example, speed and steering angle.

**Revendications**

**1.** Procédé de détection du sens de déplacement d'un véhicule, selon lequel un signe d'une vitesse V(t) déterminée est défini afin d'obtenir le sens de déplacement, un signal d'accélération a(t) d'un capteur d'accélération (2) et en plus une information de vitesse $V_l$ étant acquis et la vitesse V(t) étant déterminée par le biais de l'intégration du signal d'accélération a(t), une constante d'intégration $V_0$ étant dérivée de l'information de vitesse $V_l$ et une correction du signal d'accélération a(t) par un décalage $a_{Offse}$t du capteur d'accélération (2) étant prévue,
**caractérisé en ce**
**qu'**une valeur de départ de décalage $a_0$ du capteur d'accélération (2) est tout d'abord calculée en définissant un différentiel dans le temps $dV_l/dt$ de l'information de vitesse $V_l$ et en soustrayant ce différentiel $dV_l/dt$ du signal d'accélération a(t), et le décalage $a_{Offset}$ du capteur d'accélération (2) est corrigé après un certain temps en générant une vitesse momentanée $V_L$ pour un déplacement lent, laquelle est comparée avec la vitesse $V_{a(t)}$(t), qui a été obtenue par intégration du signal d'accélération a(t), la différence $V_{a(t)}$(t)-$V_L$ des deux vitesses étant utilisée pour corriger le décalage $a_{Offset}$ du capteur d'accélération (2).

**2.** Procédé selon la revendication 1, **caractérisé en ce que** la vitesse momentanée $V_L$ pour un déplacement lent est générée à partir d'impulsions de roue d'au moins un codeur à impulsions (3, 4, 5, 6) respectif.

**3.** Procédé selon la revendication 2, **caractérisé en ce que** pour définir une vitesse momentanée $V_L$ pour un déplacement lent à partir d'impulsions de roue, un trajet parcouru $\Delta s$ est divisé par un temps mesuré $\Delta t$, le trajet parcouru $\Delta s$ se composant du trajet qui a été parcouru par au moins une roue équipée d'un codeur à impulsions (3, 4, 5, 6) depuis un dernier changement d'impulsion de roue d'au moins un compteur d'impulsions de roue, et le nombre de boucles entre les deux impulsions de roue précédentes ou, s'il est plus grand, le temps depuis le dernier changement d'impulsion de roue étant pris comme temps mesuré $\Delta t$.

**4.** Procédé selon la revendication 3, **caractérisé en ce que** si aucune des valeurs comptées de l'au moins un compteur d'impulsions de roue ne change dans une boucle, une extrapolation de la vitesse momentanée $V_L$ est effectuée, la vitesse initiale $V_A$ utilisée étant la dernière valeur de la vitesse momentanée $V_{L-1}$ calculée lors d'un changement d'impulsion de roue et la vitesse momentanée extrapolée $V_{Lextr.}$ étant calculée conformément à $V_{Lextr.} = V_A + a_L \cdot \Delta t_L$, avec la vitesse momentanée $V_A$ calculée en dernier lors d'un changement d'impulsion de roue, l'accélération $a_L$ et le temps $\Delta t_L$ conformément au nombre de boucles depuis le dernier changement d'impulsion de roue, l'accélération $a_L$ étant calculée à partir de la dernière valeur de la vitesse momentanée $V_{L-1}$ calculée lors d'un changement d'impulsion de roue et d'une valeur de la vitesse momentanée $V_{L-2}$ calculée avant celle-ci et la différence des deux valeurs de la vitesse momentanée $V_{L-1}$ - $V_{L-2}$ divisée par le temps $\Delta t_{L2-1}$ écoulé entre les calculs des deux valeurs de la vitesse momentanée $V_{L-1}$ et $V_{L-2}$ correspondant à l'accélération $a_L$.

**5.** Procédé selon la revendication 4, **caractérisé en ce que** lorsqu'il ne faut calculer que la valeur absolue de la vitesse momentanée, la valeur est fixée à zéro lorsque la vitesse momentanée extrapolée $V_{Lextr.}$ est inférieure à zéro.

**6.** Procédé selon la revendication 4 ou 5, **caractérisé en ce que** la plausibilité de vitesse momentanée extrapolée $V_{Lextr.}$ est vérifiée en comparant

$$\Delta S_L < \frac{1}{2} a_L . \Delta t_L^2$$

et

$$\Delta S_L < V_L . \Delta t_L,$$

un nombre d'impulsions de roue correspondant à un trajet parcouru $\Delta S_L$ donné pouvant être attendu pour toutes les valeurs de la vitesse momentanée extrapolées $V_{Lextr.}$ après un temps $\Delta t_L$ donné, au moins lorsque l'accélération $a_L$ est positive ou nulle.

**7.** Procédé selon l'une des revendications 2 à 6, **caractérisé en ce qu'**une définition de la vitesse $V(t)$ du véhicule est réalisée par intégration du signal d'accélération avec correction du décalage $a_{ges}(t)$ en tenant compte d'une constante d'intégration qui correspond à la vitesse initiale $V_0$ du véhicule au moment de la définition du décalage, conformément à

$$V(t) = V_0 + \int_0^t a_{ges}(t)dt,$$

le signal d'accélération avec correction du décalage $a_{ges}(t)$ utilisé ici étant constitué conformément à

$$a_{ges}(t) = a(t) + a_{Offset} + g . \sin(\alpha(t)),$$

avec l'accélération due à la pesanteur g, le tracé dans le temps de la pente $\alpha(t)$ et le signal d'accélération $a(t)$.

**8.** Procédé selon l'une des revendications 2 à 7, **caractérisé en ce que** l'équation suivante s'applique pour le décalage $a_{Offset}$ du capteur d'accélération (2)

$$a_{Offset} = \frac{\Delta V - V_0 + V_L - \int_0^t a(t)dt - g \int_0^t \sin(\alpha(t))dt}{t},$$

l'équation $\Delta V = V(t) - V_L$ s'appliquant pour un écart mesuré $\Delta V$ entre la vitesse $V(t)$ déterminée par intégration du signal d'accélération corrigé et l'information de vitesse $V_I$ obtenue par les impulsions de roue.

**9.** Procédé selon l'une des revendications 1 à 8, **caractérisé en ce que** le décalage est défini de manière cyclique après un certain temps.

**10.** Procédé selon la revendication 1, **caractérisé en ce que** le tracé d'une pente ($\alpha(t)$) et pris en compte pour définir le décalage ($a_{Offset}$) du capteur d'accélération.

**11.** Procédé selon la revendication 10, **caractérisé en ce que** pour tenir compte du tracé de la pente lors de la définition du décalage ($a_{Offset}$) du capteur d'accélération (2), une référence temporelle au tracé de la pente est établie en rapportant un angle de pente ($\alpha$(t)) à la position dans le temps du véhicule sur la pente.

12. Procédé selon la revendication 10 ou 11, **caractérisé en ce que** pour tenir compte du tracé de la pente lors de la définition du décalage du capteur d'accélération (2), une intégrale dans le temps de la force d'entraînement vers le bas (g . sin($\alpha$(t))) est calculée, et cette intégrale est divisée par la différence entre la limite supérieure et la limite inférieure de cette intégrale.

13. Dispositif pour mettre en oeuvre un procédé selon l'une des revendications précédentes, **caractérisé en ce qu'**il existe sur un véhicule (1) un capteur d'accélération (2) muni d'une première unité d'interprétation correspondante avec laquelle peuvent être interprétées les impulsions de course ou de roue déterminées avec les codeurs à impulsions (3, 4, 5, 6) sur les roues du véhicule automobile (1) et **en ce que** les codeurs à impulsions (3, 4, 5, 6) et/ou le capteur d'accélération (2) sont reliés par le biais de canaux de communication avec une unité d'interprétation (9) commandée par ordinateur dans le véhicule (1), avec laquelle peuvent en plus être interprétées d'autres données spécifiques au véhicule, comme par exemple la vitesse et l'angle de direction.

# Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1655206 A2
- DE 102006003674 A1
- DE 102004029038 A1